Europäisches Patentamt

European Patent Office

Office européen des brevets

(11) Veröffentlichungsnummer: **0 141 060**

**A1**

(12) **EUROPÄISCHE PATENTANMELDUNG**

(21) Anmeldenummer: **84108972.5**

(22) Anmeldetag: **28.07.84**

(51) Int. Cl.⁴: **C 04 B 41/63**
**C 08 J 3/24**

(30) Priorität: **19.09.83 CH 5070/83**

(43) Veröffentlichungstag der Anmeldung:
**15.05.85 Patentblatt 85/20**

(84) Benannte Vertragsstaaten:
**AT DE FR GB IT SE**

(71) Anmelder: **GEORG FISCHER AKTIENGESELLSCHAFT**
**Mühlentalstrasse 105**
**CH-8201 Schaffhausen(CH)**

(72) Erfinder: **Voegeli, Marcel**
**Riethaldenstieg 5**
**CH-8200 Schaffhausen(CH)**

(54) Verfahren zur Herstellung von Formkörpern aus gefülltem Kunststoff.

㊐ Bei der Herstellung eines Formkörpers aus gefülltem Kunststoff nach dem Imprägnierverfahren wird von einem offenporigen, selbsttragenden Formling ausgegangen, der mit einer flüssigen, einen Radikalbildner enthaltenden, polymerisierbaren Reaktionsmasse gefüllt, an der Oberfläche versiegelt und anschliessend vollständig ausgehärtet wird.

Die Versiegelung erfolgt durch Eintauchen des mit der Reaktionsmasse gefüllten Formlings in ein Behandlungsbad, welches einen Zersetzungskatalysator für den Radikalbildner enthält. Der in die Reaktionsmasse eindiffundierende Zersetzungskatalysator bringt die Polymerisation der Reaktionsmasse in Gang, welche bis zur oberflächlichen Versiegelung der Poren des Formlings im Behandlungsbad durchgeführt wird.

EP 0 141 060 A1

Croydon Printing Company Ltd.

GEORG FISCHER AKTIENGESELLSCHAFT,     8201 Schaffhausen

2396/FE / 19.9.1983 / Li-mw /

Verfahren zur Herstellung von Formkörpern aus gefülltem
Kunststoff

Die Erfindung betrifft ein Verfahren zur Herstellung von
Formkörpern aus gefülltem Kunststoff nach dem Oberbegriff
des 1. Patentanspruches.

Bei derartigen Imprägnier-Verfahren werden die bei den
üblichen Press-, Aufsprüh- oder Handlaminationsverfahren
auftretenden Emissionen flüchtiger Anteile aus der flüssigen Reaktionsmasse vermieden.

Ein Verfahren gemäss dem Oberbegriff des 1. Anspruches
ist bereits aus der WO 80/00249 bekannt. Die Versiegelung
der Oberfläche des mit Reaktionsmasse gefüllten Formlings
geschieht bei diesem vorbekannten Verfahren durch UV-Bestrahlung der mit einem Photosensibilisator versetzten
Reaktionsmasse.

Wegen des sehr hohen Preises solcher Photosensibilisatoren
eignet sich dieses Verfahren jedoch nicht für die Massenfertigung. Zudem scheitert die Herstellung komplizierter Formkörper an der schwierig durchzuführenden Ausleuchtung
von Hinterschnitten mit UV.

Die Verwendung von Zersetzungskatalysatoren für kalthärtende Reaktionsmassen ist beispielsweise aus der DE-OS 2 111 149
bekannt, doch bewirkt die Zugabe des Zersetzungskatalysators zur Radikalbildner enthaltenden Reaktionsmasse eine
auf 15 - 60 Minuten beschränkte Topfzeit was eine rationelle Fertigung verunmöglicht und Gefahren in sich birgt.

Die rein thermische Aushärtung der Reaktionsmasse, also
ohne Zersetzungskatalyse oder Photoinitiierung, ist zwar
möglich, führt aber bei den hier interessierenden Imprägnierverfahren zu grösseren Verlusten an aus den unversiegelten Poren des Formlings austretender Reaktionsmasse.

Der Erfindung liegt die Aufgabe zugrunde, die eingangs
erwähnten Nachteile zu vermeiden, bei einer gleichzeitigen
Vereinfachung und Verbilligung des Herstellverfahrens.

Erfindungsgemäss wird diese Aufgabe durch die Lehre des
Anspruchs 1 gelöst.

Vorteilhafte Weiterbildungen sind den abhängigen Ansprüchen
zu entnehmen.

Die Herstellung des offenporigen, selbsttragenden Formlings erfolgt zweckmässigerweise nach dem Kernschiessverfahren unter Verwendung eines preisgünstigen Quarzsandes
als Füllstoff mit einem in der Giessereiindustrie üblichen
Vorbinder wie beispielsweise in der WO/00249 beschrieben.

- 3 -

Als Reaktionsmasse haben sich Giessharzsysteme auf der Basis ungesättigter Polyesterharze in Styrol, von Methylmethacrylatharzen oder von Vinylestern bewährt.

Die Füllung des offenporigen, selbsttragenden Formlings mit der Reaktionsmasse erfolgt zweckmässigerweise unter Vakuum in einer dazu geeigneten, handelsüblichen Imprägnieranlage.

Als Radikalbildner kommen Peroxide in Frage, insbesondere Bis-alkylperoxycarbonate, Diacylperoxide oder Diarylperoxide, wie beispielsweise das Benzoylperoxid.

Eine weitere Verbesserung des Verfahrens besteht darin als Radikalbildner ein Mehrfach-Peroxidsystem zu verwenden, um die Aushärtung der Reaktionsmasse im Formling über mehrere Stufen weitgehend spannungsfrei durchführen zu können. Besonders bewährt hat sich eine Mischung von 0,01 bis 0,5 Gew. % Bis-cyclohexylperoxy-carbonat, 0,1 bis 1,0 Gew. % Dilauroylperoxid und 0,5 bis 2,0 Gew. % Benzoylperoxid.

Als besonders geeignete Zersetzungskatalysatoren für die Radikalbildner haben sich tertiäre Amine, insbesondere tertiäre Anilide, wie beispielsweise Dimethylanilin, Dimethyl-p-toluidin oder Diäthylanilin bewährt.

Falls die Erzielung einer hochqualitativen Oberfläche des Formkörpers angestrebt wird kann dem Behandlungsbad ein Photosensibilisator zugegeben werden. Die Initiierung erfolgt dann entweder durch UV-Bestrahlung oder später durch die natürliche Einwirkung der Sonnenbestrahlung auf den im Gebrauch stehenden Formkörper.

Die durch das Eindiffundieren des Zersetzungskatalysators
in die Reaktionsmasse ausgelöste Polymerisation wird erfindungsgemäss bis zu einer oberflächlichen Versiegelung
der Poren des Formlings im Behandlungsbad durchgeführt
und kann anschliessend durch Zuführung von Wärme innerhalb oder ausserhalb des Behandlungsbades zu Ende geführt
werden. Eine besondere Ausführungsform besteht darin, dass
die Zufuhr von Wärme innerhalb des Behandlungsbades so
gesteuert wird, dass vor Ausbildung der oberflächlichen
Versiegelung der Poren des Formlings eine solche Menge an
Zersetzungskatalysator in die im Formling enthaltene
Reaktionsmasse eindiffundieren kann, dass in einem erheblichen, in der Randzone des Formlings liegenden Teil der
Reaktionsmasse eine Kalthärtung ausgelöst wird, gefolgt
von einer thermisch aktivierten Gelierung des davon nicht
erfassten Teiles der Reaktionsmasse, welche in der Kernzone des Formlings liegt.

Bei einer Endaushärtung ausserhalb des Behandlungsbades
ist eine Stärke der Versiegelungsschicht von etwa 1 mm
anzustreben um den mit Reaktionsmasse gefüllten Formling
sicher handhaben zu können, d.h. einen Austritt von
Reaktionsmasse aus dem Formling zu vermeiden.

Das Behandlungsbad, welches den Zersetzungskatalysator
und allfällige weitere Additive (Wärme- und UV-Stabilisatoren) enthält besteht zweckmässigerweise zur Hauptsache aus einem polyfunktionellen Alkohol, vorzugsweise
Glykol oder Glycerin.

- 5 -

Das Aufziehen des Zersetzungskatalysators, bzw. weiterer
Additive mittels dieses Behandlungsbades hat sich als
besonders sparsame Methode erwiesen, gegenüber der direkten Zugabe zur Rezeptur der Reaktionsmasse.

Das erfindungsgemässe Verfahren wird nun anhand des nachstehenden Beispiels näher erläutert.

Beispiel

Ein nach dem in der Giessereiindustrie bekannten Cold-
Box-Verfahren hergestellter offenporiger, selbsttragender Körper in Form einer Strassenkappe mit einem Volumen
von 2240 cm$^3$ wurde in einer Vakuum-Imprägnieranlage bei
21$^o$ C 5 Minuten lang auf 15 mb evakuiert. Danach wurde der
Formling bei gleicher Temperatur während 10 Minuten bei
1000 mb mit einer Reaktionsmasse folgender Zusammensetzung
durchflutet:

| | | |
|---|---|---|
| 92,9 | Teile | ungesättigtes Polyesterharz |
| 5 | Teile | Styrol |
| 0,2 | Teile | Bis-(dicyclohexylperoxy)-carbonat |
| 0,5 | Teile | Lauroylperoxid |
| 1,4 | Teile | Benzoylperoxid |

Die dem Formling anhaftende überschüssige Reaktionsmasse
liess man 4 Minuten lang abtropfen und tauchte hierauf
den gefüllten Formling in ein Behandlungsbad bestehend
aus

| | | |
|---|---|---|
| 98 | Teilen | Glykol und |
| 2 | Teilen | Dimethylanilin. |

Eine stetige Wärmebehandlung des im Behandlungsbad eingetauchten Formlings von anfangs Raumtemperatur bis zu einer
Geliertemperatur von 55° C über eine Zeitspanne von 60 Min.
führte zu einer versiegelnden Aushärtung des Harzes an
der Oberfläche des Formteils und zu einer Gelierung des
Harzes im Formteilinneren. Aus dem Bad entfernt, wurde
der Formling in einem Ofen während 4 Stunden bei 90° C
vollständig ausgehärtet.

Der totale Verlust an Reaktionsmasse für sämtliche Operationen betrug lediglich 0,36 % gegenüber ca. 3 % für
konventionelle thermische Verfahren.

Die Zugfestigkeit des so erhaltenen Formkörpers betrug
24,3 N/mm$^2$ (S = 2,29, V = 3,5).

Die vielfältigen Anwendungsmöglichkeiten des erfindungsgemäss erhaltenen Formkörpers sind ausführlich in der
WO/00249 beschrieben.

<u>P a t e n t a n s p r ü c h e</u>

2396/FE

1. Verfahren zur Herstellung von Formkörpern, aus gefülltem Kunststoff, wobei ein Gemisch eines teilchenförmigen Füllstoffes mit einem Vorbinder verformt, ausgehärtet und der erhaltene offenporige, selbsttragende Formling mit einer flüssigen, mindestens einen Radikalbildner enthaltenden, polymerisierbaren Reaktionsmasse gefüllt, an der Oberfläche versiegelt und anschliessend vollständig ausgehärtet wird, dadurch gekennzeichnet, dass man den mit Reaktionsmasse gefüllten Formling in ein Behandlungsbad bringt, welches einen Zersetzungskatalysator für die Radikalbildner enthält und die durch das Eindiffundieren des Zersetzungskatalysators in die Reaktionsmasse ausgelöste Polymerisation mindestens bis zu einer oberflächlichen Versiegelung der Poren des Formlings im Behandlungsbad ablaufen lässt.

2. Verfahren nach Anspruch 1, dadurch gekennzeichnet, dass die Reaktionsmasse ein Giessharzsystem aus der Gruppe der ungesättigten Polyesterharze, der Methylmethacrylatharze oder der Vinylester ist.

3. Verfahren nach Anspruch 1 oder 2, dadurch gekennzeichnet, dass die Radikalbildner Peroxide, beispielsweise Diacylperoxide, Diarylperoxide oder Bis-alkylperoxycarbonate sind.

4. Verfahren nach einem der Ansprüche 1 bis 3, dadurch gekennzeichnet, dass der Radikalbildner aus mehreren in ihrer thermischen Zersetzungsenergie und Konzentration unterschiedlichen Peroxiden, beispielsweise 0,01 bis 0,5 Gew. % Bis-cyclohexylperoxy-carbonat, 0,1 bis 1,0 Gew. % Dilauroylperoxid und 0,5 bis 2,0 Gew. % Benzoylperoxid, besteht.

5. Verfahren nach einem der Ansprüche 1 bis 4, dadurch gekennzeichnet, dass der Zersetzungskatalysator ein tertiäres Amin, vorzugsweise ein tertiäres Anilid, beispielsweise Dimethylanilin, Dimethyl-p-toluidin oder Diäthylanilin, ist.

6. Verfahren nach einem der Ansprüche 1 bis 5, dadurch gekennzeichnet, dass die Polymerisationsreaktion durch Zuführung von Wärme innerhalb oder ausserhalb des Behandlungsbades beschleunigt wird.

7. Verfahren nach Anspruch 6, dadurch gekennzeichnet, dass die Zufuhr von Wärme innerhalb des Behandlungsbades so gesteuert wird, dass vor Ausbildung der oberflächlichen Versiegelung der Poren des Formlings eine solche Menge an Zersetzungskatalysator in die im Formling enthaltene Reaktionsmasse eindiffundieren kann, dass in einem erheblichen, in der Randzone des Formlings liegenden Teil der Reaktionsmasse eine Kalthärtung ausgelöst wird, gefolgt von einer thermisch aktivierten Gelierung des davon nicht erfassten Teiles der
Reaktionsmasse, welche in der Kernzone des Formlings
liegt.

8. Verfahren nach einem der Ansprüche 1 bis 7, dadurch
gekennzeichnet, dass dem Behandlungsbad ein UV-Photosensibilisator zugegeben wird.

9. Verfahren nach Anspruch 8, dadurch gekennzeichnet,
dass der versiegelte Formling ausserhalb des Behandlungsbades einer UV-Bestrahlung unterworfen wird.

10. Verfahren nach einem der Ansprüche 1 bis 9, dadurch
gekennzeichnet, dass das Behandlungsbad zur Hauptsache aus einem polyfunktionellen Alkohol, vorzugsweise Glykol oder Glycerin, besteht.

11. Verfahren nach einem der Ansprüche 1 bis 10, dadurch
gekennzeichnet, dass dem Behandlungsbad weitere
Additive, beispielsweise Wärme- und UV-Stabilisatoren
zugesetzt werden.

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,Y | WO-A-8 000 249  (GEORG FISCHER)  * Ansprüche 1,2,5-7; Seite 6, Zeilen 17-20 * | 1,2,6, 10 | C 04 B  41/63 C 08 J   3/24 |
| Y | DE-C- 950 833  (HOECHST) * Ansprüche 1,2; Seite 2, Zeilen 53-59 * | 1,6 | |
| D,Y | DE-A-2 111 149  (MITSUI TOATSU CHEMICALS) * Seite 5, Zeilen 8-30; Seite 9, Zeilen 22-32; Seite 10, Zeilen 9-16; Seite 11, Zeilen 27-33; Seite 12, Zeilen 12-14 * | 1,2,6, 10 | |
| A | | 3,5 | RECHERCHIERTE SACHGEBIETE (Int. Cl.4) |
| A | US-A-3 198 868  (G. PEDRETTI et al.) * Spalte 1, Zeilen 39-60 * | 1,3,6 | C 04 B  41/00 C 08 J   3/00 |
| A | FR-A-2 212 305  (ETERNIT) * Ansprüche 1,4,8; Seite 2, Zeilen 20-21,26-28; Seite 3, Zeilen 3-6 * | 1-3 | |

Der vorliegende Recherchenbericht wurde für alle Patentansprüche erstellt.

| Recherchenort | Abschlußdatum der Recherche | Prüfer |
|---|---|---|
| DEN HAAG | 18-12-1984 | DAELEMAN P.C.A. |